# EUROPEAN PATENT APPLICATION

(11) **EP 4 242 798 A1**
(43) Date of publication of application: **13.09.2023**
(21) Application number: 22767345.6
(22) Date of filing: 11.02.2022
(51) Int. Cl.: G06F 3/01, G06F 3/041, G06F 3/04886

(54) **ELECTRONIC DEVICE FOR PROVIDING VIBRATION FEEDBACK, AND OPERATION METHOD THEREFOR**

(30) Priority: 11.03.2021 KR 20210031983
(71) Applicant: Samsung Electronics Co., Ltd., Suwon-si, Gyeonggi-do 16677 (KR)
(72) Inventor: KIM, Taesik, Suwon-si, Gyeonggi-do 16677 (KR); SEO, Hyundeok, Suwon-si, Gyeonggi-do 16677 (KR); KIM, Miyoung, Suwon-si, Gyeonggi-do 16677 (KR); SONG, Yongjae, Suwon-si, Gyeonggi-do 16677 (KR); SHIM, Sangwon, Suwon-si, Gyeonggi-do 16677 (KR); LEE, Yonggu, Suwon-si, Gyeonggi-do 16677 (KR)
(74) Representative: Appleyard Lees IP LLP
(86) International application number: PCT/KR2022/002080
(87) International publication number: WO 2022/191449

(57) **Abstract**

An electronic device for providing vibration feedback and an operating method of the electronic device are provided. The electronic device includes a vibration generator disposed in a predetermined position of the electronic device and configured to generate vibration feedback, and a processor configured to, when a trigger condition for the vibration feedback is satisfied, identify an operation mode of the electronic device and configured to determine a direction in which the vibration feedback generated by the vibration generator is to be transmitted in the electronic device, based on the trigger condition and the operation mode.

## Description

### BACKGROUND

### 1. Field

The disclosure relates to an electronic device for providing vibration feedback and an operating method of the electronic device.

### 2. Description of Related Art

At least one haptic motor may be disposed in an electronic device. Such a haptic motor may be disposed in an electronic device to provide a user with feedback according to various gestures including touch gestures. The haptic motor may include an internal vibrator. Applied electrical energy may be changed to kinetic energy so that the internal vibrator may vibrate with a predetermined frequency, to provide vibration feedback to the user.

The above information is presented as background information only to assist with an understanding of the disclosure. No determination has been made, and no assertion is made, as to whether any of the above might be applicable as prior art with regard to the disclosure.

### SUMMARY

With the popularization of electronic devices, the requirements of the quality of experience that a user may feel with respect to a corresponding device are increasing. However, a vibration motor included in an electronic device provides monotonous vibration feedback, or provides vibration feedback in only a pattern changing regardless of an operating situation of the electronic device.

Aspects of the disclosure are to address at least the above-mentioned problems and/or disadvantages and to provide at least the advantages described below. Accordingly, an aspect of the disclosure is to provide an electronic device that provides intuitive, sensory, and uniform feedback to a user by transmitting vibration feedback in a direction determined based on a trigger condition for the vibration feedback and an operation mode of the electronic device.

In addition, according to various example embodiments, more diverse and sophisticated vibration feedback may be provided to a user by controlling an intensity or a length of vibration feedback generated based on an amplitude and/or a duration of a control signal transmitted to a vibration generator.

Additional aspects will be set forth in part in the description which follows and, in part, will be apparent from the description, or may be learned by practice of the presented embodiments.

In accordance with an aspect of the disclosure, an electronic device is provided. The electronic device includes a vibration generator configured to generate vibration feedback and disposed in a predetermined position of the electronic device, and a processor configured to, when a trigger condition for the vibration feedback is satisfied, identify an operation mode of the electronic device, and to determine a direction in which the vibration feedback generated by the vibration generator is to be transmitted in the electronic device, based on the trigger condition and the operation mode.

In accordance with another aspect of the disclosure, an operating method of an electronic device is provided. The operating method includes determining whether a trigger condition for vibration feedback to be provided by the electronic device is satisfied, identifying an operation mode of the electronic device when the trigger condition is determined to be satisfied, determining a direction in which the vibration feedback is to be transmitted in the electronic device, based on the trigger condition and the operation mode, the vibration feedback being generated by a vibration generator included in the electronic device, determining a phase of a control signal corresponding to the direction, and generating the vibration feedback to be transmitted in the direction using the vibration generator based on the control signal having the phase.

According to various example embodiments, vibration feedback may be provided based on a position of a key input by a user through a keypad, and thus it may be possible to provide intuitive feedback about whether a key intended by the user is accurately input. In addition, vibration feedback corresponding to an event within an application executed in an electronic device may be provided, and thus it may be possible to provide a more realistic user experience by providing both visual feedback and tactile feedback. Furthermore, when a predetermined button displayed on an electronic device is input, vibration feedback may be provided according to a position of a corresponding button, and thus it may be possible to provide sensory feedback about whether a button intended by a user is accurately input.

Other aspects, advantages, and salient features of the disclosure will become apparent to those skilled in the art from the following detailed description, which, taken in conjunction with the annexed drawings, discloses various embodiments of the disclosure.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 is a block diagram illustrating an electronic device in a network environment according to an embodiment of the disclosure;
FIG. 2 is a diagram illustrating vibration feedback generated in an electronic device according to an embodiment of the disclosure;
FIG. 3 is a diagram illustrating a control signal of a vibration controller and a vibration amplitude of a vibration generator according to a type of vibration feedback, according to an embodiment of the disclosure;
FIGS. 4 and 5 are diagrams illustrating an operation of providing vibration feedback in response to a keypad input of an electronic device according to various embodiments of the disclosure;
FIG. 6 is a diagram illustrating an operation of providing vibration feedback according to an event within an application executed in an electronic device, according to an embodiment of the disclosure;
FIG. 7 is a diagram illustrating an operation of providing vibration feedback in response to a button input of an electronic device, according to an embodiment of the disclosure;
FIGS. 8, 9, 10, and 11 are diagrams illustrating an operation of providing vibration feedback based on an operation mode of an electronic device according to various embodiments of the disclosure;
FIG. 12 is a diagram illustrating an electronic device according to an embodiment of the disclosure; and
FIG. 13 is a diagram illustrating an operating method of an electronic device according to an embodiment of the disclosure.

Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of various embodiments of the disclosure is provided for illustration purpose only and not for the purpose of limiting the disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

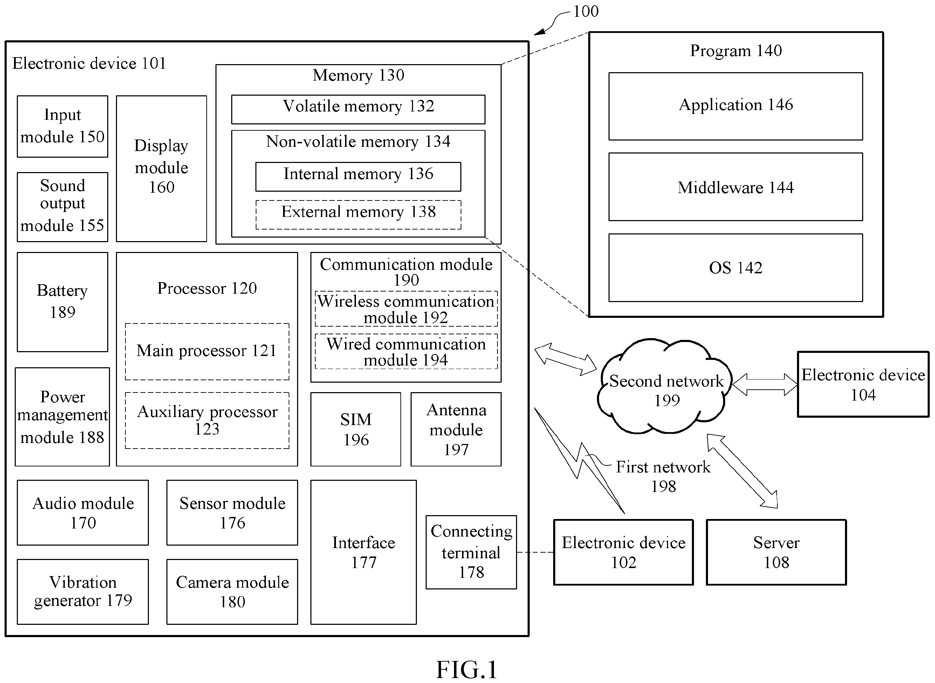

FIG. 1 is a block diagram illustrating an electronic device in a network environment according to an embodiment of the disclosure.

Referring to FIG. 1, an electronic device 101 in a network environment 100 may communicate with an electronic device 102 via a first network 198 (e.g., a short-range wireless communication network), or communicate with at least one of an electronic device 104 or a server 108 via a second network 199 (e.g., a long-range wireless communication network). According to an example embodiment, the electronic device 101 may communicate with the electronic device 104 via the server 108. According to an example embodiment, the electronic device 101 may include a processor 120, a memory 130, an input module 150, a sound output module 155, a display module 160, an audio module 170, and a sensor module 176, an interface 177, a connecting terminal 178, a vibration generator 179, a camera module 180, a power management module 188, a battery 189, a communication module 190, a subscriber identification module (SIM) 196, or an antenna module 197. In some example embodiments, at least one of the components (e.g., the connecting terminal 178) may be omitted from the electronic device 101, or one or more other components may be added in the electronic device 101. In some example embodiments, some of the components (e.g., the sensor module 176, the camera module 180, or the antenna module 197) may be integrated as a single component (e.g., the display module 160).

The processor 120 may execute, for example, software (e.g., a program 140) to control at least one other component (e.g., a hardware or software component) of the electronic device 101 connected to the processor 120, and may perform various data processing or computation. According to an example embodiment, as at least a part of data processing or computation, the processor 120 may store a command or data received from another component (e.g., the sensor module 176 or the communication module 190) in a volatile memory 132, process the command or the data stored in the volatile memory 132, and store resulting data in a non-volatile memory 134. According to an example embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with the main processor 121. For example, when the electronic device 101 includes the main processor 121 and the auxiliary processor 123, the auxiliary processor 123 may be adapted to consume less power than the main processor 121 or to be specific to a specified function. The auxiliary processor 123 may be implemented separately from the main processor 121 or as a part of the main processor 121.

The auxiliary processor 123 may control at least some of functions or states related to at least one (e.g., the display module 160, the sensor module 176, or the communication module 190) of the components of the electronic device 101, instead of the main processor 121 while the main processor 121 is in an inactive (e.g., sleep) state or along with the main processor 121 while the main processor 121 is an active state (e.g., executing an application). According to an example embodiment, the auxiliary processor 123 (e.g., an ISP or a CP) may be implemented as a portion of another component (e.g., the camera module 180 or the communication module 190) that is functionally related to the auxiliary processor 123. According to an example embodiment, the auxiliary processor 123 (e.g., an NPU) may include a hardware structure specified for artificial intelligence model processing. An artificial intelligence model may be generated by machine learning. Such learning may be performed by, for example, the electronic device 101 in which artificial intelligence is performed, or performed via a separate server (e.g., the server 108). Learning algorithms may include, but are not limited to, for example, supervised learning, unsupervised learning, semi-supervised learning, or reinforcement learning. The AI model may include a plurality of artificial neural network layers. An artificial neural network may include, for example, a deep neural network (DNN), a convolutional neural network (CNN), a recurrent neural network (RNN), a restricted Boltzmann machine (RBM), a deep belief network (DBN), and a bidirectional recurrent deep neural network (BRDNN), a deep Q-network, or a combination of two or more thereof, but is not limited thereto. The AI model may additionally or alternatively include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored as software in the memory 130, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output a sound signal to the outside of the electronic device 101. The sound output module 155 may include, for example, a speaker or a receiver. The speaker may be used for general purposes, such as playing multimedia or playing record. The receiver may be used to receive an incoming call. According to an example embodiment, the receiver may be implemented separately from the speaker or as a part of the speaker.

The display module 160 may visually provide information to the outside (e.g., a user) of the electronic device 101. The display module 160 may include, for example, a control circuit for controlling a display, a hologram device, or a projector and control circuitry to control a corresponding one of the display, the hologram device, and the projector. According to an example embodiment, the display module 160 may include a touch sensor adapted to detect a touch, or a pressure sensor adapted to measure the intensity of force incurred by the touch.

The audio module 170 may convert a sound into an electric signal or vice versa. According to an example embodiment, the audio module 170 may obtain the sound via the input module 150 or output the sound via the sound output module 155 or an external electronic device (e.g., the electronic device 102 such as a speaker or a headphone) directly or wirelessly connected to the electronic device 101.

The sensor module 176 may detect an operational state (e.g., power or temperature) of the electronic device 101 or an environmental state (e.g., a state of a user) external to the electronic device 101, and generate an electric signal or data value corresponding to the detected state. According to an example embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an example embodiment, the interface 177 may include, for example, a high-definition multimedia interface (HDMI), a universal serial bus (USB) interface, a secure digital (SD) card interface, or an audio interface.

The connecting terminal 178 may include a connector via which the electronic device 101 may be physically connected to an external electronic device (e.g., the electronic device 102). According to an example embodiment, the connecting terminal 178 may include, for example, an HDMI connector, a USB connector, an SD card connector, or an audio connector (e.g., a headphone connector).

The vibration generator 179 may convert an electric signal into a mechanical stimulus (e.g., a vibration or a movement) or an electrical stimulus which may be recognized by a user via his or her tactile sensation or kinesthetic sensation. According to an example embodiment, the vibration generator 179 may include, for example, a motor, a piezoelectric element, or an electric stimulator.

The camera module 180 may capture a still image and moving images. According to an example embodiment, the camera module 180 may include one or more lenses, image sensors, image signal processors, or flashes.

The power management module 188 may manage power supplied to the electronic device 101. According to an example embodiment, the power management module 188 may be implemented as, for example, at least a part of a power management integrated circuit (PMIC).

The battery 189 may supply power to at least one component of the electronic device 101. According to an example embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently of the processor 120 (e.g., an AP) and that support a direct (e.g., wired) communication or a wireless communication. According to an example embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module, or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., a LAN or a wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network after a 4G network, and a next-generation communication technology, e.g., a new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., a mmWave band) to achieve, e.g., a high data transmission rate. The wireless communication module 192 may support various technologies for securing performance on a high-frequency band, such as, e.g., beamforming, massive multiple-input and multiple-output (MIMO), full dimensional MIMO (FD-MIMO), an array antenna, analog beam-forming, or a large scale antenna. The wireless communication module 192 may support various requirements specified in the electronic device 101, an external electronic device (e.g., the electronic device 104), or a network system (e.g., the second network 199). According to an example embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an example embodiment, the antenna module 197 may include an antenna including a radiating element including a conductive material or a conductive pattern formed in or on a substrate (e.g., a printed circuit board (PCB)). According to an example embodiment, the antenna module 197 may include a plurality of antennas (e.g., array antennas). In such a case, at least one antenna appropriate for a communication scheme used in a communication network, such as the first network 198 or the second network 199, may be selected by, for example, the communication module 190 from the plurality of antennas. The signal or the power may be transmitted or received between the communication module 190 and the external electronic device via the at least one selected antenna. According to an example embodiment, another component (e.g., a radio frequency integrated circuit (RFIC)) other than the radiating element may be additionally formed as a part of the antenna module 197. According to various example embodiments, the antenna module 197 may form a mmWave antenna module. According to an example embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an example embodiment, commands or data may be transmitted or received between the electronic device 101 and the external electronic device 104 via the server 108 coupled with the second network 199. Each of the external electronic devices 102 or 104 may be a device of the same type as or a different type from the electronic device 101. According to an example embodiment, all or some of operations to be executed by the electronic device 101 may be executed at one or more of the external electronic devices 102 and 104, and the server 108. For example, if the electronic device 101 needs to perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and may transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an example embodiment, the external electronic device 104 may include an Internet-of things (IoT) device. The server 108 may be an intelligent server using machine learning and/or a neural network. According to an example embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various example embodiments may be one of various types of electronic devices. The electronic device may include, for example, a portable communication device (e.g., a smartphone), a computer device, a portable multimedia device, a portable medical device, a camera, a wearable device, or a home appliance device. According to an example embodiment of the disclosure, the electronic device is not limited to those described above.

It should be appreciated that various example embodiments of the disclosure and the terms used therein are not intended to limit the technological features set forth herein to particular example embodiments and include various changes, equivalents, or replacements for a corresponding example embodiment. In connection with the description of the drawings, like reference numerals may be used for similar or related components. It is to be understood that a singular form of a noun corresponding to an item may include one or more of the things, unless the relevant context clearly indicates otherwise. As used herein, "A or B", "at least one of A and B", "at least one of A or B", "A, B or C", "at least one of A, B and C", and "A, B, or C," each of which may include any one of the items listed together in the corresponding one of the phrases, or all possible combinations thereof. Terms such as "first", "second", or "first" or "second" may simply be used to distinguish the component from other components in question, and may refer to components in other aspects (e.g., importance or order) is not limited. It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various example embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an example embodiment, the module may be implemented in a form of an application-specific integrated circuit (ASIC).

Various example embodiments as set forth herein may be implemented as software (e.g., the program 140) including one or more instructions that are stored in a storage medium (e.g., the internal memory 136 or the external memory 138) that is readable by a machine (e.g., the electronic device 101) For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an example embodiment, a method according to various example embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various example embodiments, each component (e.g., a module or a program) of the above-described components may include a single entity or multiple entities, and some of the multiple entities may be separately disposed in different components. According to various example embodiments, one or more of the above-described components may be omitted, or one or more other components may be added. Alternatively or additionally, a plurality of components (e.g., modules or programs) may be integrated into a single component. In such a case, according to various example embodiments, the integrated component may still perform one or more functions of each of the plurality of components in the same or similar manner as they are performed by a corresponding one of the plurality of components before the integration. According to various example embodiments, operations performed by the module, the program, or another component may be carried out sequentially, in parallel, repeatedly, or heuristically, or one or more of the operations may be executed in a different order or omitted, or one or more other operations may be added.

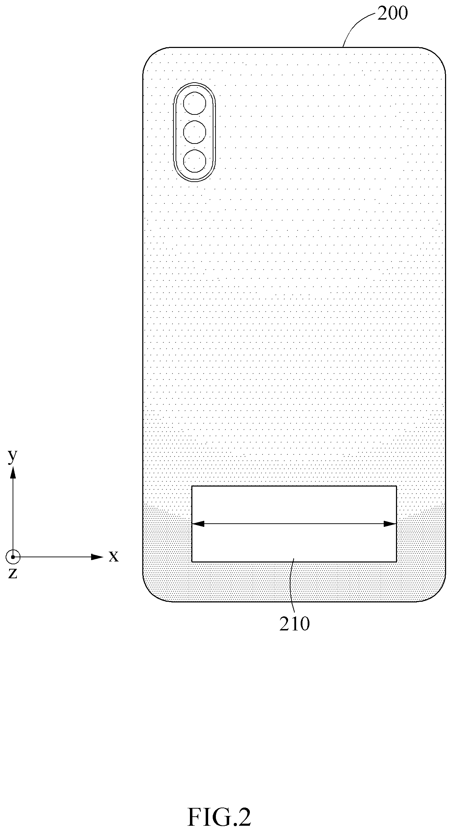

FIG. 2 is a diagram illustrating vibration feedback generated in an electronic device according to an embodiment of the disclosure.

Referring to FIG. 2, an electronic device 200 (e.g., the electronic device 101 of FIG. 1) may be implemented as one of devices for various purposes. For example, the electronic device 200 may include various computing devices such as a mobile phone, a smartphone, a tablet, a laptop, a personal computer (PC) or an electronic book (e-book) device, and various wearable devices such as a smartwatch, smart glasses or a head-mounted display (HMD).

The electronic device 200 may include a vibration generator 210 (e.g., the vibration generator 179 of FIG. 1) configured to provide vibration feedback to a user holding or touching the electronic device 200. If a user enters a predetermined key on a keypad displayed on or included in the electronic device 200, if a predetermined event in an application executed in the electronic device 200 occurs, or if a predetermined button displayed on the electronic device 200 is input, the vibration generator 210 may generate corresponding vibration feedback. The vibration generator 210 may include a horizontal linear motor in which an internal vibrator for generating vibration vibrates in a horizontal direction. Unlike a vertical linear motor that is relatively thick and that has a limitation in making the electronic device 200 thin, the horizontal linear motor may enhance a vibration force by increasing a vibration direction or a volume of a vibrator in a horizontal direction without a need to increase a thickness of the electronic device 200. An arrow in the vibration generator 210 shown in FIG. 2 may indicate a vibration direction (e.g., an x-axis direction) of a vibrator.

The vibration generator 210 may be disposed in a portion (e.g., a lower end portion) of the electronic device 200 which is mainly gripped by a user, to transmit strong vibration feedback to the user. A density of dots in the electronic device 200 shown in FIG. 2 may represent a vibration intensity of a corresponding portion. A vibration generated in the lower end portion of the electronic device 200 in which the vibration generator 210 is disposed may be greater than a vibration generated in an upper end portion of the electronic device 200. If a vibration is generated in the horizontal direction in the vibration generator 210, a weakest vibration may be generated in an upper central portion of the electronic device 200.

A processor (not shown, e.g., the processor 120 of FIG. 1) included in the electronic device 200 may control a direction in which vibration feedback generated by the vibration generator 210 is to be transmitted in the electronic device 200. For example, when the direction in which the vibration feedback is to be transmitted is determined by the processor, a corresponding control signal may be transmitted to the vibration generator 210, and a vibrator included in the vibration generator 210 may start to vibrate according to the control signal. The vibrator may have a vibration pattern in which a magnitude of a vibration gradually increases and then decreases. If the vibrator most strongly vibrates, vibration feedback may be transmitted in a direction the vibrator hits. For example, when the vibrator hits in a +x-axis direction (e.g., a right direction in FIG. 2) within the vibration generator 210 while most strongly vibrating, vibration feedback generated by the vibration generator 210 may be transmitted to a right side of the electronic device 200 through a hard medium included in the electronic device 200 to reach a housing of the electronic device 200. A user holding a corresponding housing portion may receive vibration feedback provided through the housing portion. As described above, the vibration feedback may be transmitted to a portion (e.g., a lower left side and a lower right side of the electronic device 200) in which a line virtually extending in a vibration direction of the vibration generator 210 meets an edge of the electronic device 200, to be provided to the user. In addition, the processor may control an intensity or a length of the vibration feedback. The processor may provide intuitive and sensory feedback to a user by adjusting at least one of the direction in which the vibration feedback is to be transmitted, the intensity, and the length of the vibration feedback. In the following description, a direction in which vibration feedback is to be transmitted may also be referred to as a "transmission direction of vibration feedback".

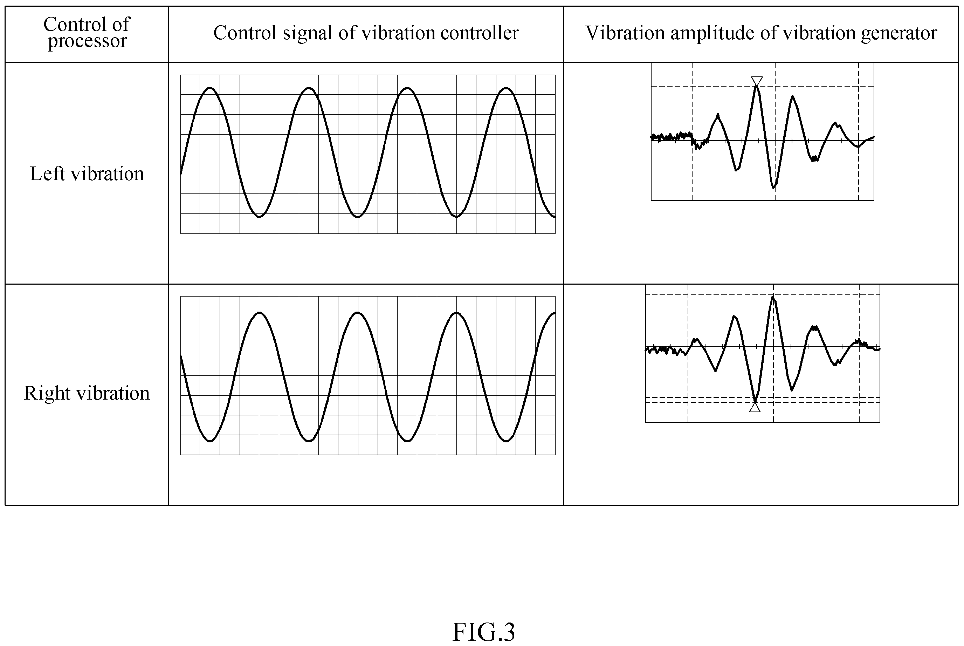

FIG. 3 is a diagram illustrating a control signal of a vibration controller and a vibration amplitude of a vibration generator according to a type of vibration feedback, according to an embodiment of the disclosure.

Referring to FIG. 3, a processor (e.g., the processor 120 of FIG. 1) of an electronic device (e.g., the electronic device 101 of FIG. 1 and the electronic device 200 of FIG. 2) may adjust a transmission direction of vibration feedback by controlling a phase of a control signal that is transmitted from a vibration controller to a vibration generator (e.g., the vibration generator 179 of FIG. 1 and the vibration generator 210 of FIG. 2).

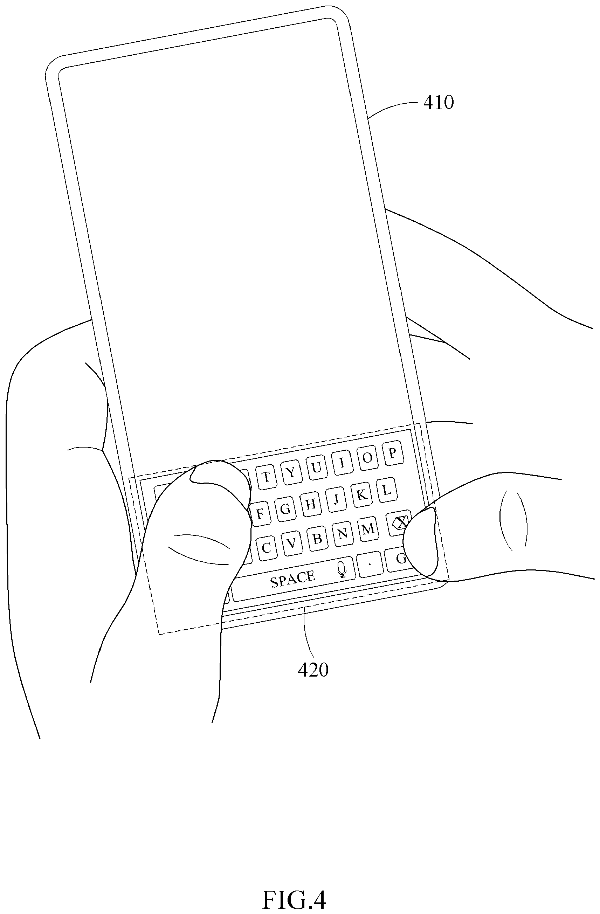

The processor may monitor whether a trigger condition for vibration feedback is generated in the electronic device. When the trigger condition is generated, the processor may determine a transmission direction of vibration feedback corresponding to the trigger condition. For example, the processor may determine the transmission direction of the vibration feedback so that the vibration feedback may be transmitted a left side or a right side of the electronic device based on the vibration generator. An operation in which the transmission direction of the vibration feedback is determined in the processor will be described in detail with reference to FIGS. 4 through 11.

The vibration controller may be a module configured to generate a control signal corresponding to a vibration-related command (e.g., a transmission direction of vibration feedback) received from the processor and to transmit the control signal to the vibration generator. For example, the vibration controller may include a driver integrated circuit (IC). If a command for a left vibration is received from the processor, the vibration controller may set the phase of the control signal to a first value. If a command for a right vibration is received from the processor, the vibration controller may set the phase of the control signal to a second value. The second value may be out of phase with the first value, and a phase difference between the first value and the second value may be 180 degrees. In the left vibration and the right vibration, the control signal of the vibration controller may include a sine wave audio signal having the same frequency and amplitude. In graphs of FIG. 3 showing the control signal, an x-axis may represent a time, and a y-axis may represent a voltage.

The vibration generator may be a module configured to generate vibration feedback based on the control signal received from the vibration controller, and may generate a vibration by changing electrical energy to kinetic energy. The vibration generator may generate a vibration with an intensity according to an amplitude of the control signal applied by the vibration controller, and various vibration patterns may be generated if a pattern or a time in which the control signal is applied is adjusted. In an example of generating the left vibration or the right vibration shown in FIG. 3, the phase of the control signal may be controlled. If the control signal is applied, a magnitude of a vibration of a vibrator in the vibration generator may gradually increase and then decrease. A direction (e.g., a left side or a right side) in which a strongest vibration is generated may be controlled, so that vibration feedback may be transmitted and a position in which a user feels the vibration feedback may be adjusted. In graphs of FIG. 3 showing the vibration amplitude of the vibration generator, a triangle mark may indicate a direction in which a strongest vibration is generated. In the graphs showing the vibration amplitude, an x-axis may represent a time, and a y-axis may represent the vibration amplitude.

According to an example embodiment, although not shown, when a strong vibration is generated on the left side or the right side, an inverted control signal may be transmitted to the vibration generator, so that a braking operation for rapidly reducing a magnitude of a vibration may be performed. By generating a short and strong vibration, clearer vibration feedback may also be provided to a user.

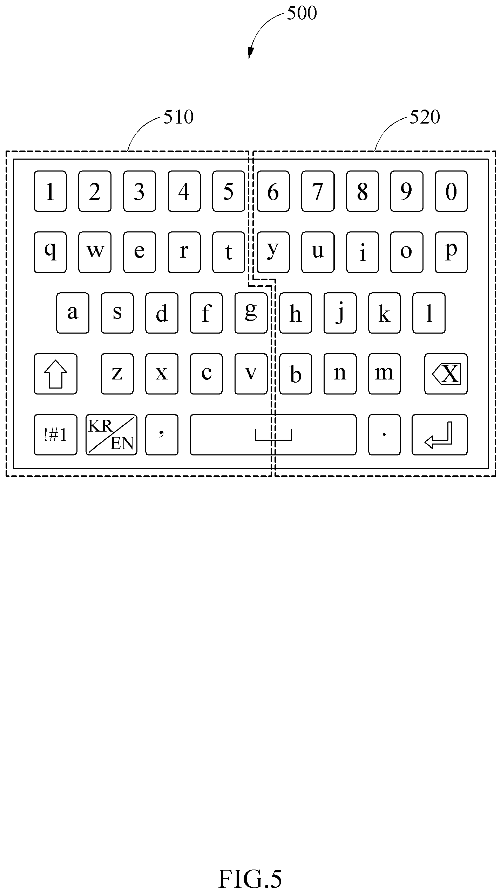

FIGS. 4 and 5 are diagrams illustrating an operation of providing vibration feedback in response to a keypad input of an electronic device according to various embodiments of the disclosure.

Referring to FIG. 4, a user may enter a predetermined key on a keypad 420 displayed on an electronic device 410 (e.g., the electronic device 101 of FIG. 1 and the electronic device 200 of FIG. 2) in a state of holding the electronic device 410. The keypad 420 may include various keys for at least one of letters, numbers, and symbols, and may be one of general interfaces used in the electronic device 410.

Unlike a keypad including physical buttons, an unintended key may be easily pressed on the keypad 420 displayed on a display of the electronic device 410 because a key is input based on a position in which a finger of a user contacts a flat display screen. To reduce a typographical error rate, the above-described vibration feedback may be used. For example, when vibration feedback is transmitted in a direction determined based on a position of a pressed key, the user may perceive a position in which the vibration feedback felt with a hand holding the electronic device 410 is transmitted and may intuitively determine whether an intended key is accurately pressed.

Referring to FIG. 5, a keypad 500 (e.g., the keypad 420 of FIG. 4) may include left keys 510 pressed by a left hand and right keys 520 pressed by a right hand. In an example, when a user enters one of the left keys 510, a processor (e.g., the processor 120 of FIG. 1) may determine a transmission direction of vibration feedback so that the vibration feedback may be transmitted to a left side, and a vibration controller may generate a control signal having a phase set to a first value based on a vibration-related command of the processor. A vibration generator (e.g., the vibration generator 179 of FIG. 1 and the vibration generator 210 of FIG. 2) may generate vibration feedback on a left side of an electronic device (e.g., the electronic device 101 of FIG. 1, the electronic device 200 of FIG. 2, and the electronic device 410 of FIG. 4) based on the phase of the control signal. In another example, when the user enters one of the right keys 520, the processor may determine a transmission direction of vibration feedback so that the vibration feedback may be transmitted to a right side, and the vibration controller may generate a control signal having a phase set to a second value based on the vibration-related command of the processor. The vibration generator may generate vibration feedback on a right side of the electronic device based on the phase of the control signal. Different vibration feedback may be generated when the left keys 510 and the right keys 520 are input on the keypad 500, and thus it may be possible to effectively reduce the typographical error rate by providing intuitive feedback about whether an intended key is input and also possible to prevent an omission of key input.

According to an example embodiment, the electronic device may provide a variety of vibration feedback by adjusting an amplitude and a duration of a control signal output from the vibration controller. When one of the left keys 510 is closer to a left end of the keypad 500 than a central portion of the keypad 500, relatively strong vibration feedback may be generated, to provide feedback about whether an intended key among the left keys 510 is accurately input. For example, both keys "a" and "f' may correspond to the left keys 510, but the key "a" may be close to the left end of the keypad 500 and the key "f' may be close to the central portion of the keypad 500. When the key "a" is input, the vibration controller may generate a control signal with a relatively high amplitude and/or a relatively long duration, and the vibration generator may generate relatively strong and/or relatively long vibration feedback based on the control signal, in comparison to when the key "f' key is input. Vibration feedback may be generated based on whether an input key corresponds to a left key or a right key and a position of the input key in the left keys or the right keys, and thus it may be possible to provide more accurate feedback to a user.

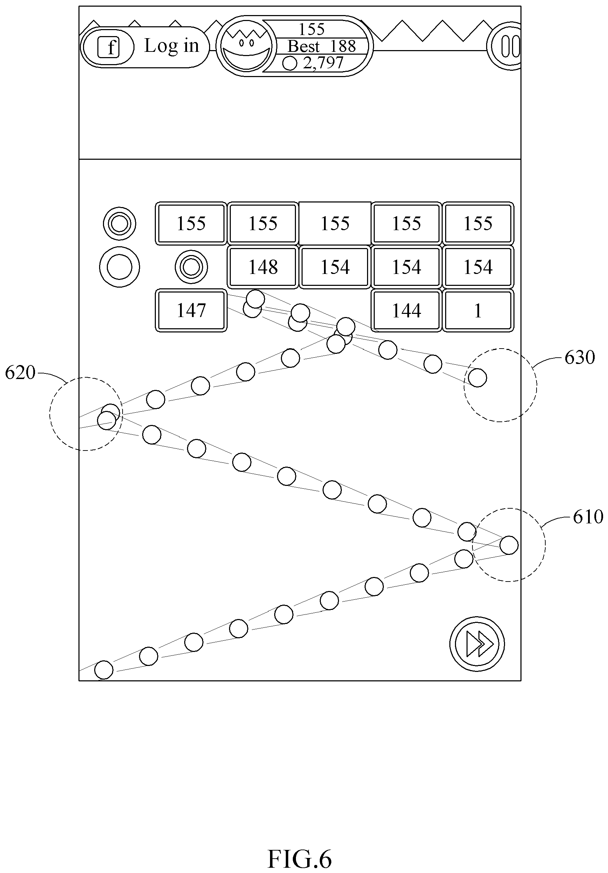

FIG. 6 is a diagram illustrating an operation of providing vibration feedback according to an event within an application executed in an electronic device, according to an embodiment of the disclosure.

Referring to FIG. 6, an example of an application executed in an electronic device (e.g., the electronic device 101 of FIG. 1, the electronic device 200 of FIG. 2, and the electronic device 410 of FIG. 4) is illustrated. The electronic device may execute various applications using a processor (e.g., the processor 120 of FIG. 1). An example of playing a game is described for convenience of description, however, the example embodiments are not limited thereto.

A first event 610 in which a ball fired from a lower left end hits a right side, a second event 620 in which the ball hits a left side, and a third event 630 in which the ball collides with upper blocks and then hits the right side again may occur. For the first event 610 and the third event 630 in which the ball hits the right side, vibration feedback may be generated on a right side of the electronic device. For the second event 620 in which the ball hits the left side, vibration feedback may be generated on a left side of the electronic device. Accordingly, a user may sense an event in which the ball hits the right side or the left side via his or her tactile sensation as well as visual sensation.

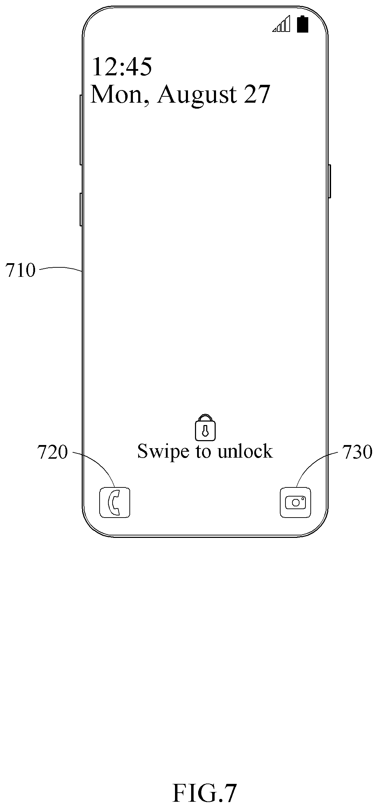

FIG. 7 is a diagram illustrating an operation of providing vibration feedback in response to a button input of an electronic device, according to an embodiment of the disclosure.

Referring to FIG. 7, examples of buttons displayed on a display of an electronic device 710 (e.g., the electronic device 101 of FIG. 1, the electronic device 200 of FIG. 2, and the electronic device 410 of FIG. 4) are illustrated. The electronic device 710 may display one or more buttons according to an operating state of the electronic device 710. For example, in FIG. 7, a call reception button 720 may be displayed if the electronic device 710 receives a call. If a user selects the call reception button 720, predetermined vibration feedback may be generated. For example, vibration feedback may be generated on a left side of the electronic device 710 because the call reception button 720 is located on the left side of the electronic device 710. In addition, the user may quickly operate a camera included in the electronic device 710 by selecting a camera button 730 displayed on a lock screen of the electronic device 710. If the camera button 730 disposed on a right side of the electronic device 710 is selected, vibration feedback may be generated on the right side of the electronic device 710. If a button displayed on the display of the electronic device 710 is selected, a transmission direction of vibration feedback may be determined based on a position of the button, to provide intuitive and sensory feedback about whether a button intended by a user is accurately input. Thus, it may be possible to effectively enhance a quality of experience of the user.

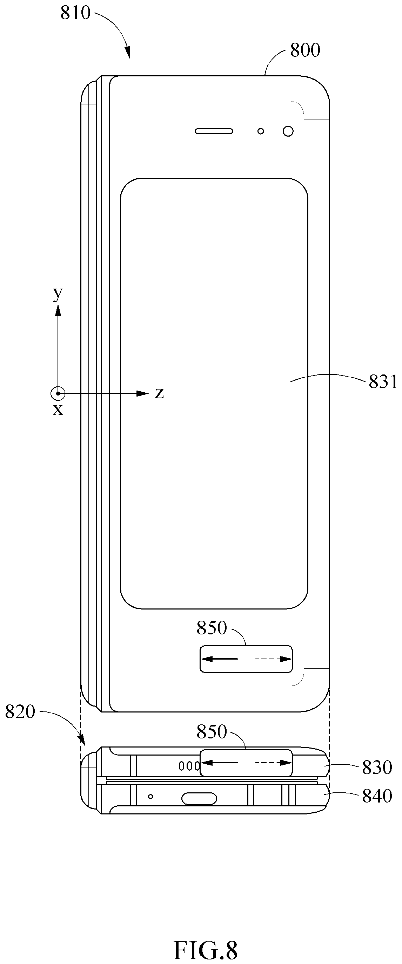

FIGS. 8 to 11 are diagrams illustrating an operation of providing vibration feedback based on an operation mode of an electronic device according to various embodiments of the disclosure.

FIG. 8 illustrates a plan view 810 and a front view 820 of an electronic device 800 (e.g., the electronic device 101 of FIG. 1, the electronic device 200 of FIG. 2, the electronic device 410 of FIG. 4, and the electronic device 710 of FIG. 7) that includes a flexible display and that is folded. The flexible display may be a bendable or foldable display device and may include various displays that may be deformed by an external force. For example, the flexible display may include a foldable display that may be folded or unfolded at an arbitrary angle or curvature, a bendable display that may be bent or unfolded with an arbitrary curvature, and a rollable display that may be rolled into a cylindrical shape.

The electronic device 800 may be divided into a first part 830 and a second part 840 based on a reference axis about which the electronic device 800 is folded. The first part 830 may be located on one side (e.g., a right side in a state in which the electronic device 800 is unfolded) of the electronic device 800 based on the reference axis. The second part 840 may be located on another side (e.g., a left side in the state in which the electronic device 800 is unfolded) of the electronic device 800 based on the reference axis.

In the electronic device 800, the above-described flexible display may be folded in an in-folding manner such that both ends thereof face each other. In a state in which the electronic device 800 is folded, a screen including information processed through the electronic device 800 or information to be processed may be displayed on a sub-display 831. The sub-display 831 may be a display disposed on the first part 830 and may be disposed on a surface different from that of the flexible display.

In an example, a vibration generator 850 (e.g., the vibration generator 179 of FIG. 1 and the vibration generator 210 of FIG. 2) may be disposed in the first part 830. A processor (e.g., the processor 120 of FIG. 1) of the electronic device 800 may determine a direction in which vibration feedback is to be transmitted through the vibration generator 850 based on a trigger condition for the vibration feedback and an operation mode of the electronic device 800. The trigger condition may be a condition to generate vibration feedback, and may include, for example, a condition in which a predetermined key is input by a user through a keypad (e.g., the keypad 420 of FIG. 4 and the keypad 500 of FIG. 5) displayed on the sub-display 831, a condition in which a predetermined event occurs in an execution screen of an application displayed on the sub-display 831, or a condition in which a button displayed on the sub-display 831 is input. The operation mode may include, for example, a portrait view mode in which the electronic device 800 operates in a vertical position, and a landscape view mode in which the electronic device 800 operates in a horizontal position. In addition, in an example of the electronic device 800 to which the flexible display is applied, the operation mode may further include an open mode in which the electronic device 800 operates in an unfolded state, and a close mode in which the electronic device 800 operates in a folded state.

Referring to FIG. 8, the portrait view mode and the close mode of the electronic device 800 are illustrated as examples.

For example, when a user enters a left key of the keypad displayed on the sub-display 831, the processor may determine a transmission direction of vibration feedback so that the vibration feedback may be transmitted to a left side of the electronic device 800, and a control signal having a phase with a predetermined value may be generated by a vibration controller based on a determination of the processor and may be transmitted to the vibration generator 850. The vibration generator 850 may generate vibration feedback on the left side of the electronic device 800 based on the control signal. Vibration feedback may be generated in a direction indicated by a solid line arrow in the vibration generator 850, as shown in FIG. 8.

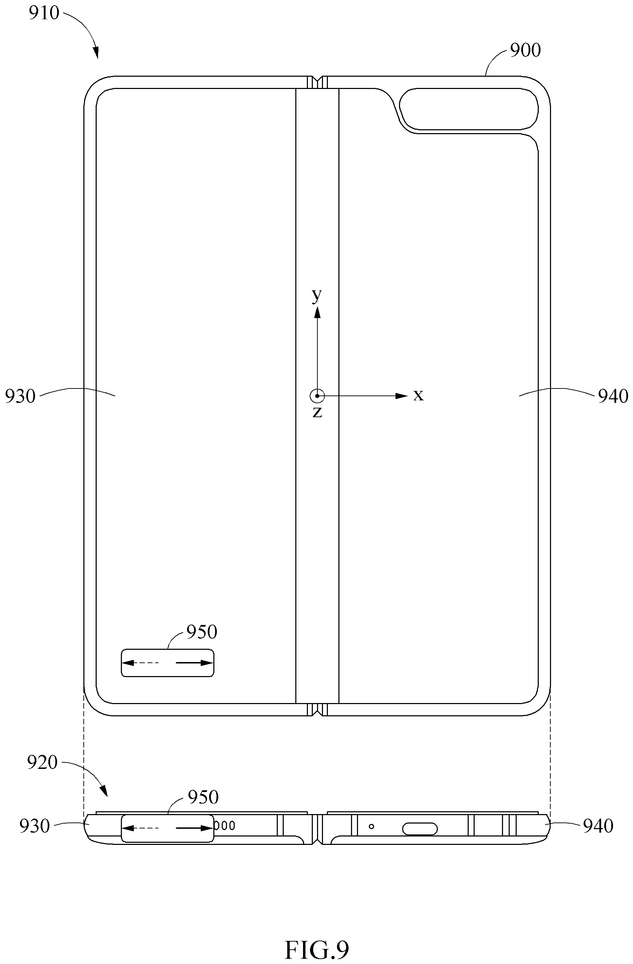

FIG. 9 illustrates a plan view 910 and a front view 920 of an electronic device 900 (e.g., the electronic device 101 of FIG. 1, the electronic device 200 of FIG. 2, the electronic device 410 of FIG. 4, the electronic device 710 of FIG. 7, and the electronic device 800 of FIG. 8) to which a flexible display is applied and which is unfolded. The electronic device 900 may be divided into a first part 930 and a second part 940 based on a reference axis about which the electronic device 900 is folded, and a vibration generator 950 (e.g., the vibration generator 179 of FIG. 1, the vibration generator 210 of FIG. 2, and the vibration generator 850 of FIG. 8) may be disposed in the first part 930. When the electronic device 900 being folded is unfolded, a left side and a right side of the vibration generator 950 may be reversed. For example, the solid line arrow and a dotted line arrow in the vibration generator 850 of FIG. 8 may point to the left side and the right side of the electronic device 800, respectively, whereas a solid line arrow and a dotted line arrow in the vibration generator 950 may point to a right side and a left side of the electronic device 900, respectively. A processor (e.g., the processor 120 of FIG. 1) of the electronic device 900 may determine a transmission direction of vibration feedback based on whether the electronic device 900 is folded.

Referring to FIG. 9, an operation mode (e.g., a portrait view mode, a landscape view mode, an open mode, and a close mode) of the electronic device 900 may be sensed using a sensor module (e.g., the sensor module 176 of FIG. 1) included in the electronic device 900. For example, the sensor module may include an acceleration sensor and/or a 6-axis sensor. The 6-axis sensor may detect a movement or a posture with six degrees of freedom (6DOF) through 3-axis acceleration sensors and 3-axis gyro sensors. The processor (e.g., the processor 120 of FIG. 1) may determine the operation mode of the electronic device 900 based on information sensed by the sensor module, and may use the operation mode to determine the transmission direction of the vibration feedback. However, an example of sensing the operation mode of the electronic device 900 is not limited thereto, and various example embodiments may be applied without limitation.

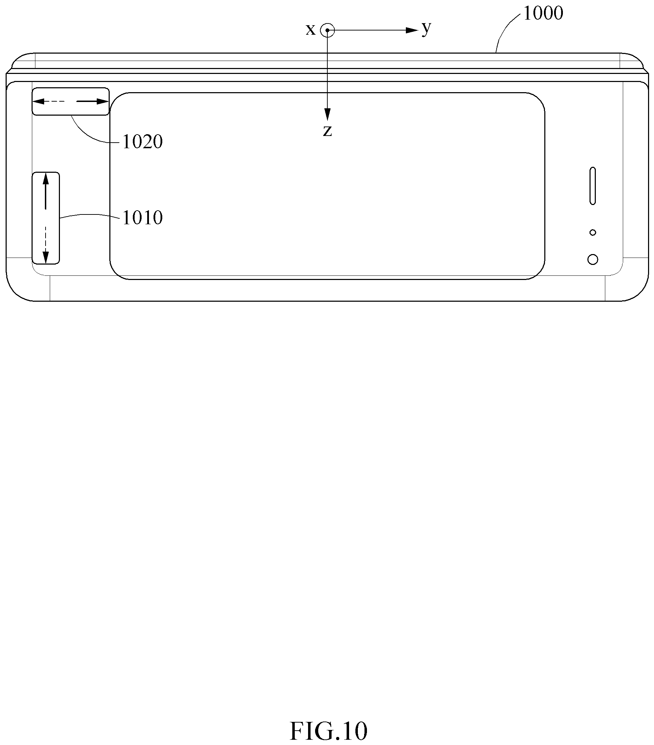

FIG. 10 illustrates an example in which an electronic device 1000 (e.g., the electronic device 101 of FIG. 1, the electronic device 200 of FIG. 2, the electronic device 410 of FIG. 4, the electronic device 710 of FIG. 7, the electronic device 800 of FIG. 8, and the electronic device 900 of FIG. 9) to which a flexible display is applied operates in a landscape view mode in a folded state.

For example, if one vibration generator is included in the electronic device 1000, vibration feedback to distinguish between a left side and a right side may be provided in one of a landscape view mode and a portrait view mode, and vibration feedback to distinguish between an upper side and a lower side may be provided in the other mode. If the electronic device 1000 includes a plurality of vibration generators 1010 and 1020 and the plurality of vibration generators 1010 and 1020 are disposed so that internal vibrators vibrate in different directions, the vibration feedback to distinguish between the left side and the right side may be provided in both the portrait view mode and the landscape view mode.

Referring to FIG. 10, the electronic device 1000 may include two vibration generators 1010 and 1020, and the vibration generators 1010 and 1020 may be disposed so that vibration directions of internal vibrators may be perpendicular to each other. In the landscape view mode, the vibration feedback to distinguish between the left side and the right side may be provided through the vibration generator 1020. In the portrait view mode, the vibration feedback to distinguish between the upper side and the lower side may be provided through the vibration generator 1010. A processor of the electronic device 1000 may select one vibration generator to generate vibration feedback from the plurality of vibration generators 1010 and 1020, based on an operation mode of the electronic device 1000.

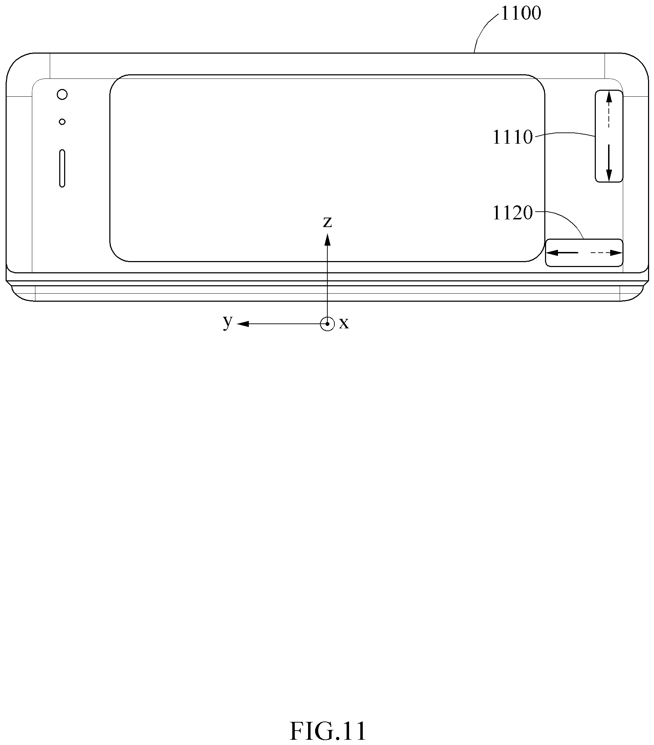

FIG. 11 illustrates an example in which an electronic device 1100 (e.g., the electronic device 101 of FIG. 1, the electronic device 200 of FIG. 2, the electronic device 410 of FIG. 4, the electronic device 710 of FIG. 7, the electronic device 800 of FIG. 8, the electronic device 900 of FIG. 9, and the electronic device 1000 of FIG. 10) to which a flexible display is applied operates in a landscape view mode in a folded state.

Referring to FIG. 11, the electronic device 1100 is in a state in which the electronic device 1000 of FIG. 10 is reversed in a vertical direction, and a left side and a right side of a vibration generator 1120 (e.g., the vibration generator 1020 of FIG. 10) may be changed. For example, a solid line arrow and a dotted line arrow in the vibration generator 1020 of FIG. 10 may point to a right side and a left side of the electronic device 1000, respectively, whereas a solid line arrow and a dotted line arrow in the vibration generator 1120 may point to a left side and a right side of the electronic device 1100, respectively. A processor (e.g., the processor 120 of FIG. 1) of the electronic device 1100 may detect a position of an upper end and/or a lower end of the electronic device 1100 operating in a landscape view mode, using a sensor module, and may use the detected position to determine a transmission direction of vibration feedback. Since the processor uses an operation mode of the electronic device 1100 to determine the transmission direction of the vibration feedback, uniform vibration feedback may be provided to a user regardless of the operation mode of the electronic device 1100.

Although not shown, the processor may transmit vibration feedback in various directions using two or more of a plurality of vibration generators included in the electronic device 1100. In an example of an input on the keypad 500 of FIG. 5, if two vibration generators, of which vibration directions are perpendicular to each other, are used, more precise vibration feedback may be provided by taking into consideration a position of a key input by a user in a vertical direction as well as a horizontal direction. For example, a key "a" may be placed in a central portion of a keypad and a key "q" may be placed above the key "a", and accordingly vibration feedback may be transmitted to an upper left end of an electronic device, using a first vibration generator that is disposed in the horizontal direction together with a second vibration generator that is disposed in the vertical direction. Vibration feedback for a left side may be generated in the first vibration generator, and vibration feedback for an upper end may be generated in the second vibration generator, and accordingly the vibration feedback may be transmitted to the upper left end.

In addition, in an example in which an event occurs in the application as shown in FIG. 6, if two vibration generators, of which vibration directions are perpendicular to each other, are used, a position in which the event occurs may be determined based on the vertical direction as well as the horizontal direction, so that more precise vibration feedback may be provided. For example, the ball may hit the right side in both the first event 610 and the third event 630, but positions on the right side in which the ball hits may be different from each other. Accordingly, vibration feedback may be allowed to be transmitted in a direction corresponding to the position where the ball hits using the second vibration generator.

In addition, in an example in which a button is input as shown in FIG. 7, if two vibration generators, of which vibration directions are perpendicular to each other, are used, a position of the input button may be determined based on the vertical direction as well as the horizontal direction, so that more precise vibration feedback may be provided. For example, when the call reception button 720 is selected, vibration feedback may be transmitted to a position of the call reception button 720 in a more precise lower left direction, instead of simply in the left direction, so that a user may feel the vibration feedback.

Although an example of using two vibration generators of which vibration directions are perpendicular to each other has been described above for convenience of description, the example embodiments are not limited thereto. Various example embodiments of using two or more vibration generators may be applied without limitation.

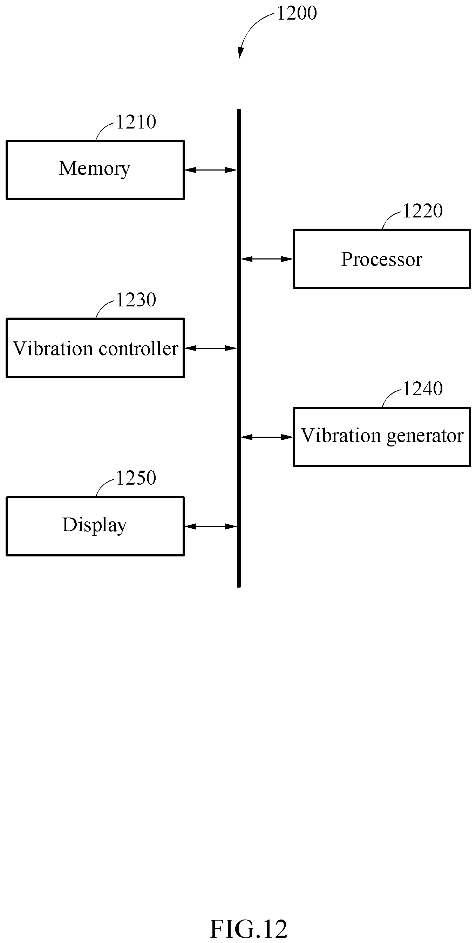

FIG. 12 is a diagram illustrating an electronic device according to an embodiment of the disclosure.

Referring to FIG. 12, an electronic device 1200 (e.g., the electronic device 101 of FIG. 1, the electronic device 200 of FIG. 2, the electronic device 410 of FIG. 4, the electronic device 710 of FIG. 7, the electronic device 800 of FIG. 8, the electronic device 900 of FIG. 9, the electronic device 1000 of FIG. 10, and the electronic device 1100 of FIG. 11) may include a memory 1210 (e.g., the memory 130 of FIG. 1), a processor 1220 (e.g., the processor 120 of FIG. 1), a vibration controller 1230, a vibration generator 1240 (e.g., the vibration generator 179 of FIG. 1, the vibration generator 210 of FIG. 2, the vibration generator 850 of FIG. 8, the vibration generator 950 of FIG. 9, and the plurality of vibration generators 1010 and 1020 of FIG. 10), and a display 1250 (e.g., the display module 160 of FIG. 1, the sub-display 831 of FIG. 8, and the flexible display of FIG. 9).

The memory 1210 may include a computer-readable instruction. When an instruction stored in the memory 1210 is implemented by the processor 1220, the processor 1220 may perform the operations described above. The memory 1210 may include, for example, a volatile memory or a non-volatile memory.

The processor 1220 may be a device that executes instructions or programs or that controls the electronic device 1200. If a trigger condition for vibration feedback is satisfied, the processor 1220 may identify an operation mode of the electronic device 1200 and may determine a direction in which the vibration feedback is to be transmitted in the electronic device 1200 through the vibration generator 1240 based on the trigger condition and the operation mode.

The vibration controller 1230 may generate a control signal under a control of the processor 1220 and may transmit the control signal to the vibration generator 1240. For example, the vibration controller 1230 may generate a control signal to which at least one of a phase, an amplitude, a duration, and a frequency determined based on the control of the processor 1220 is applied.

The vibration generator 1240 may be disposed in a predetermined position of the electronic device 1200 to transmit vibration feedback in the direction determined by the processor 1220. The vibration generator 1240 may generate vibration feedback based on the control signal received from the vibration controller 1230, and a transmission direction of the vibration feedback may be different from that of the vibration generator 1240. For example, the vibration generator 1240 may include a horizontal linear motor.

The display 1250 may display a screen including information processed by the electronic device 1200 or information to be processed. For example, the display 1250 may display at least one of a keypad (e.g., the keypad 420 of FIG. 4 and the keypad 500 of FIG. 5), an application execution screen, and one or more buttons.

According to an example embodiment, the electronic device 1200 may further include a sensor module (not shown). The sensor module (e.g., the sensor module 176 of FIG. 1) may collect data used to determine whether the electronic device 1200 operates in an operation mode, for example, a portrait view mode or a landscape view mode, and/or whether the electronic device 1200 operates in an open mode or a closed mode when a flexible display is applied to the electronic device 1200, and may transmit the data to the processor 1220.

The electronic device 1200 may transmit the vibration feedback in a direction determined based on the trigger condition for the vibration feedback and the operation mode of the electronic device 1200, to provide intuitive, sensory, and uniform feedback to a user. In addition, more diverse and sophisticated vibration feedback may be provided to a user by controlling an intensity or a length of vibration feedback generated based on an amplitude and/or a duration of the control signal transmitted to the vibration generator 1240.

In addition, the electronic device 1200 may process the operations described above.

According to an example embodiment, the electronic device 1200 may include the vibration generator 1240 disposed in a predetermined position of the electronic device 1200 and configured to generate vibration feedback, and the processor 1220 configured to, when a trigger condition for vibration feedback is satisfied, identify the operation mode of the electronic device 1200 and configured to determine a direction in which the vibration feedback generated by the vibration generator 1240 is to be transmitted in the electronic device 1200 based on the trigger condition and the operation mode.

According to an example embodiment, the electronic device 1200 may further include the vibration controller 1230 configured to generate a control signal based on a control of the processor 1220 and transmit the control signal to the vibration generator 1240. The vibration generator 1240 may generate vibration feedback that is to be transmitted in a direction determined based on a phase of the control signal.

According to an example embodiment, the vibration generator 1240 may generate vibration feedback to be transmitted to one end of the electronic device 1200 in response to the phase of the control signal being set to a first value, and may generate vibration feedback to be transmitted to another end of the electronic device 1200 in response to the phase of the control signal being set to a second value that is out-of-phase with the first value.

According to an example embodiment, the vibration feedback to be transmitted to the one end of the electronic device 1200 may be transmitted to a first body part of a user in contact with the one end, and the vibration feedback to be transmitted to the other end of the electronic device 1200 may be transmitted to a second body part of the user that is different from the first body part and that is in contact with the other end.

According to an example embodiment, the control signal may include a sine wave audio signal.

According to an example embodiment, the trigger condition may include an input to a keypad displayed on or included in the electronic device 1200, and the processor 1220 may determine a transmission direction of the vibration feedback based on a position of a key input by a user through the keypad.

According to an example embodiment, the processor 1220 may further determine at least one of an intensity and a length of the vibration feedback based on the position of the input key.

According to an example embodiment, the processor 1220 may determine to increase the intensity or the length of the vibration feedback when the position of the key input through the keypad is closer to one of both ends of the keypad than a central portion of the keypad.

According to an example embodiment, the trigger condition may include an occurrence of a predetermined event in an application executed in the electronic device 1200, and the processor 1220 may determine a transmission direction of vibration feedback based on a position in which the event occurs in the display 1250 of the electronic device 1200.

According to an example embodiment, the trigger condition may include a selection of one of buttons displayed on the display 1250 of the electronic device 1200, and the processor 1220 may determine a transmission direction of vibration feedback based on a position of a button selected from the buttons displayed on the display 1250.

According to an example embodiment, the operation mode may include an open mode in which the electronic device 1200 including a flexible display operates in an unfolded state, and a close mode in which the electronic device 1200 operates in a folded state, and the processor 1220 may determine a transmission direction of vibration feedback in the open mode and a transmission direction of vibration feedback in the close mode to be different from each other.

According to an example embodiment, the vibration generator 1240 may be disposed in a direction perpendicular to a reference axis about which the electronic device 1200 is folded.

According to an example embodiment, the vibration generator 1240 may include at least one horizontal linear motor in which an internal vibrator for generating a vibration vibrates in a horizontal direction.

According to an example embodiment, when the vibration generator 1240 includes a plurality of horizontal linear motors, the plurality of horizontal linear motors may be arranged so that internal vibrators may vibrate in different directions.

According to an example embodiment, the operation mode may include a landscape view mode in which the electronic device 1200 operates in a horizontal direction and a portrait view mode in which the electronic device 1200 operates in a vertical direction, and a horizontal linear motor that generates vibration feedback in the landscape view mode, and a horizontal linear motor that generates vibration feedback in the portrait view mode may be different from each other.

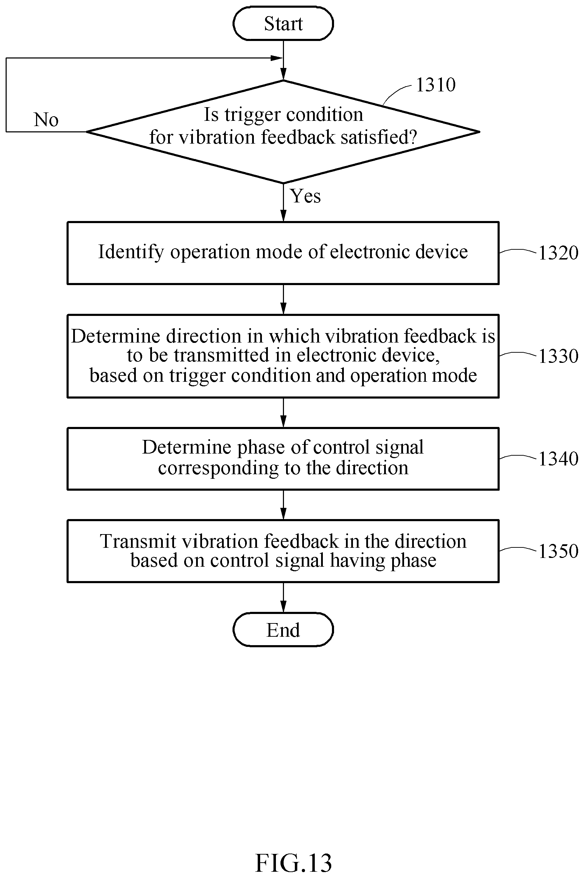

FIG. 13 is a diagram illustrating an operating method of an electronic device according to an embodiment of the disclosure.

Referring to FIG. 13, operations may be performed sequentially, but not necessarily performed sequentially. For example, the operations of the method may be performed in an order different from that described above, and at least two operations among the operations may be performed in parallel. Operations 1310, 1320, 1330, 1340 and 1350 may be performed by at least one component of an electronic device (e.g., the electronic device 101 of FIG. 1, the electronic device 200 of FIG. 2, the electronic device 410 of FIG. 4, the electronic device 710 of FIG. 7, the electronic device 800 of FIG. 8, the electronic device 900 of FIG. 9, the electronic device 1000 of FIG. 10, the electronic device 1100 of FIG. 11, and the electronic device 1200 of FIG. 12).

In operation 1310, the electronic device may determine whether a trigger condition for vibration feedback is satisfied. The trigger condition may be a condition to generate vibration feedback in the electronic device, and may include, for example, a condition in which a predetermined key is input through a keypad displayed on a display (e.g., the display module 160 of FIG. 1, the sub-display 831 of FIG. 8, the flexible display of FIG. 9, and the display 1250 of FIG. 12), a condition in which a predetermined event occurs in an execution screen of an application displayed on the display, or a condition in which a button displayed on the display is input. However, an example of the trigger condition for the vibration feedback is not limited thereto, and various example embodiments may be applied without limitation.

If the trigger condition is not satisfied, the electronic device may reperform operation 1310. If the trigger condition is satisfied, the electronic device may perform operation 1320.

In operation 1320, the electronic device may identify an operation mode of the electronic device. The operation mode may include, for example, a portrait view mode in which the electronic device operates in a vertical position, and a landscape view mode in which the electronic device operates in a horizontal position. For example, when a flexible display is applied to the electronic device, the operation mode may additionally include an open mode in which the electronic device operates in an unfolded state and a close mode in which the electronic device operates in a folded state.

In operation 1330, the electronic device may determine a direction in which the vibration feedback is to be transmitted, based on the trigger condition and the operation mode.

In operation 1340, the electronic device may determine a phase of a control signal corresponding to the determined direction.

In operation 1350, the electronic device may transmit the vibration feedback in a corresponding direction based on the control signal having the determined phase.

According to an example embodiment, an operating method of an electronic device may include determining whether a trigger condition for vibration feedback to be provided by the electronic device is satisfied, identifying an operation mode of the electronic device when the trigger condition is determined to be satisfied, determining a direction in which the vibration feedback is to be transmitted in the electronic device, based on the trigger condition and the operation mode, the vibration feedback being generated by a vibration generator (e.g., the vibration generator 179 of FIG. 1, the vibration generator 210 of FIG. 2, the vibration generator 850 of FIG. 8, the vibration generator 950 of FIG. 9, the plurality of vibration generators 1010 and 1020 of FIG. 10, and the vibration generator 1240 of FIG. 12) included in the electronic device, determining a phase of a control signal corresponding to the direction, generating the vibration feedback to be transmitted in the direction using the vibration generator based on the control signal having the phase.

According to an example embodiment, the generating of the vibration feedback may include generating the vibration feedback to be transmitted to one end of the electronic device in response to the phase of the control signal being set to a first value, and generating the vibration feedback to be transmitted to another end of the electronic device in response to the phase of the control signal being set to a second value that is out-of-phase with the first value.

According to an example embodiment, the trigger condition may include an input to a keypad displayed on or included in the electronic device, and the determining of the direction in which the vibration feedback is to be transmitted may include determining the direction in which the vibration feedback is to be transmitted, based on a position of a key input by a user through the keypad.

According to an example embodiment, the trigger condition may include an occurrence of a predetermined event in an application executed in the electronic device, and the determining of the direction in which the vibration feedback is to be transmitted may include determining the direction in which the vibration feedback is to be transmitted, based on a position in which an event occurs in a display of the electronic device.

While the disclosure has been shown and described with reference to various embodiments thereof, it will be understood by those skilled in the art that various changes in form and details may be made therein without departing from the spirit and scope of the disclosure as defined by the appended claims and their equivalents.

## Claims

1. An electronic device comprising:
a vibration generator configured to generate vibration feedback, the vibration generator being disposed in a predetermined position of the electronic device; and
a processor configured to:
when a trigger condition for the vibration feedback is satisfied, identify an operation mode of the electronic device, and
determine a direction in which the vibration feedback generated by the vibration generator is to be transmitted in the electronic device, based on the trigger condition and the operation mode.

2. The electronic device of claim 1, further comprising:
a vibration controller configured to:
generate a control signal based on a control of the processor, and
transmit the control signal to the vibration generator,
wherein the vibration generator is configured to generate the vibration feedback that is to be transmitted in a direction determined based on a phase of the control signal.

3. The electronic device of claim 2, wherein the vibration generator is configured to:
generate the vibration feedback to be transmitted to one end of the electronic device in response to the phase of the control signal being set to a first value; and
generate the vibration feedback to be transmitted to another end of the electronic device in response to the phase of the control signal being set to a second value that is out-of-phase with the first value.

4. The electronic device of claim 3,
wherein the vibration feedback to be transmitted to the one end is transmitted to a first body part of a user in contact with the one end, and
wherein the vibration feedback to be transmitted to the other end is transmitted to a second body part of the user that is different from the first body part and that is in contact with the other end.

5. The electronic device of claim 2, wherein the control signal comprises a sine wave audio signal.

6. The electronic device of claim 1,
wherein the trigger condition comprises an input to a keypad displayed on or included in the electronic device, and
wherein the processor is configured to determine the direction in which the vibration feedback is to be transmitted, based on a position of a key input by a user through the keypad.

7. The electronic device of claim 6, wherein the processor is configured to further determine at least one of an intensity and a length of the vibration feedback based on the position of the key input through the keypad.

8. The electronic device of claim 7, wherein when the position of the key input through the keypad is closer to one of both ends of the keypad than a central portion of the keypad, the processor is configured to determine to increase the intensity or the length of the vibration feedback.

9. The electronic device of claim 1,
wherein the trigger condition comprises an occurrence of a predetermined event in an application executed in the electronic device, and
wherein the processor is configured to determine the direction in which the vibration feedback is to be transmitted, based on a position in which an event occurs in a display of the electronic device.

10. The electronic device of claim 1,
wherein the trigger condition comprises a selection of one of buttons displayed on a display of the electronic device, and
wherein the processor is configured to determine the direction in which the vibration feedback is to be transmitted, based on a position of a button selected from the buttons displayed on the display.

11. The electronic device of claim 1,
wherein the operation mode comprises an open mode in which the electronic device comprising a flexible display operates in an unfolded state, and a close mode in which the electronic device operates in a folded state, and
wherein the processor is configured to determine a direction in which the vibration feedback is to be transmitted in the open mode and a direction in which the vibration feedback is to be transmitted in the close mode to be different from each other.

12. The electronic device of claim 11, wherein the vibration generator is disposed to be perpendicular to a reference axis about which the electronic device is folded.

13. The electronic device of claim 1, wherein the vibration generator comprises at least one horizontal linear motor in which an internal vibrator for generating a vibration vibrates in a horizontal direction.

14. The electronic device of claim 13,
wherein when the vibration generator comprises a plurality of horizontal linear motors, and
wherein the plurality of horizontal linear motors are arranged so that internal vibrators vibrate in different directions.

15. An operating method of an electronic device, the method comprising:
determining whether a trigger condition for vibration feedback to be provided by the electronic device is satisfied;
identifying an operation mode of the electronic device when the trigger condition is determined to be satisfied;
determining a direction in which the vibration feedback is to be transmitted in the electronic device, based on the trigger condition and the operation mode, the vibration feedback being generated by a vibration generator included in the electronic device;
determining a phase of a control signal corresponding to the direction; and
generating the vibration feedback to be transmitted in the direction using the vibration generator based on the control signal having the phase.
